Europäisches Patentamt

**European Patent Office**

**Office européen des brevets**

(11) Numéro de publication: **0 194 227**
A1

(12) # DEMANDE DE BREVET EUROPEEN

(21) Numéro de dépôt: **86810071.0**

(22) Date de dépôt: **10.02.86**

(51) Int. Cl.⁴: **B 23 B 31/30**, B 23 Q 3/00,
B 25 B 11/00

(30) Priorité: **28.02.85 FR 8503099**

(43) Date de publication de la demande: **10.09.86**
**Bulletin 86/37**

(84) Etats contractants désignés: **AT BE CH DE FR GB IT LI
LU NL SE**

(71) Demandeur: **JEAN GALLAY S.A., 108, Chemin du
Pont-du-Centenaire, CH-1228 Plan-Les-Ouates Genève
(CH)**

(72) Inventeur: **Rathgeb, Hermann, 21, Chemin des Fraisiers,
CH-1212 Grand-Lancy (CH)**

(74) Mandataire: **Nithardt, Roland, CABINET ROLAND
NITHARDT Rue Edouard Verdan 15, CH-1400 Yverdon
(CH)**

(54) **Appareil de préparation et/ou de prereglage d'un outil pour machine d'usinage.**

(57) Appareil de préparation et/ou de préréglage d'un outil pour machine d'usinage

La présente invention concerne un appareil de préréglage des outils d'une machine-outil.

Cet appareil comporte une broche (10) pourvue d'un siège (11) de forme tronoconique, destiné à recevoir un manchon porte-outils (12) ayant une surface d'appui tronconique. La surface latérale du siège (11) est équipée d'un évidement (13) sous forme de cavité annulaire qui est reliée par des conduits (18, 19) à des moyens d'aspiration, par l'intermédiaire d'un conduit axial 24 et d'un joint tournant 25.

Cet appareil est utilisé pour le préréglage d'outils de centres d'usinage.

EP 0 194 227 A1

# APPAREIL DE PREPARATION ET/OU DE PREREGLAGE D'UN OUTIL POUR MACHINE D'USINAGE

La présente invention concerne un appareil de préparation et/ou de préréglage d'un outil pour machine d'usinage, porté par un manchon ayant un axe de symétrie de révolution, cet appareil comportant d'une part une broche munie d'un siège concave ayant également un axe de symétrie de révolution, ce siège étant conformé pour supporter ledit manchon ou une pièce intermédiaire supportant ce manchon, et d'autre part des moyens pneumatiques pour exercer une force d'appui sur le manchon et/ou la pièce intermédiaire, cette force d'appui ayant une composante parallèle à l'axe du siège concave.

Dans les machines-outils, en particulier les centres d'usinage à commande numérique, il est impératif de connaître avec précision les cotes des outils utilisés. La préparation des outils, c'est-à-dire leur remise à la cote et/ou leur mesure, s'effectue habituellement en dehors de la machine. A cet effet, on monte les outils sur des manchons dont les embouts de fixation sont coniques ou cylindriques, et qui sont destinés à être fixés sur le siège de forme appropriée d'une broche de support.

Pour que ce préréglage et/ou cette mesure soient très précis, il conviendrait de serrer le manchon porte-outil dans l'appareil de préparation avec une force constante, c'est-à-dire en appliquant un couple de serrage constant. Ceci n'est en général pas possible parce que cette force de serrage du manchon dans la broche, est difficilement contrôlable dans les appareils connus. Du fait que la force de serrage appliquée est constante, on peut effectuer les corrections avec une grande précision au moyen d'un facteur correcteur constant.

Enfin, les manchons de serrage comportent chacun un embout de préhension destiné à coopérer avec un organe de préhension approprié solidaire de la broche de la machine-outil. Or il existe sur le marché une très grande diversité d'organes de préhension et par conséquent une grande diversité d'embouts de préhension. Chaque appareil de préréglage devait, jusqu'à ce jour, être conçu de manière à s'adapter aux embouts de préhension des outils dont il était sensé effectuer le préréglage. Compte tenu de la diversité de ces embouts, chaque cas devait être considéré comme un cas particulier, et chaque appareil de préréglage devait être adapté en conséquence.

Or tous les outils comportent un élément standard, à savoir le cône ou le cylindre prévus pour être montés dans le siège de la broche. Cet élément a été normalisé. La présente invention utilise ce fait en effectuant le serrage de l'outil en agissant sur la seule partie normalisée de cet outil et en abandonnant toute action mécanique sur les éléments variables, à savoir les embouts de préhension, de ces outils.

Ce but est atteint par l'appareil de préparation et/ou de préréglage d'outils selon l'invention, caractérisé en ce que ledit siège concave et/ou ladite pièce intermédiaire comportent au moins un évidement superficiel situé dans la zone de contact du siège et du manchon, et/ou du siège et de la pièce intermédiaire, et/ou de la pièce inter-médiaire et du manchon, en ce que l'appareil est équipé de moyens d'aspiration de l'air pour abaisser la pression dans le siège à une valeur sous-atmosphérique et en ce qu'il comporte des moyens de liaison pour mettre en communication lesdits moyens d'aspiration avec ledit évidement superficiel.

Selon un mode de réalisation particulièrement avantageux de l'appareil dans lequel le siège concave est tronconique et le manchon ou ladite pièce intermédiaire comporte une surface d'appui tronconique agencée pour s'adapter audit siège, ledit évidement superficiel comporte au moins une cavité annulaire ménagée dans la zone centrale de la surface du siège, la hauteur de cette zone centrale étant inférieure à la hauteur de la surface d'appui tronconique du manchon ou de la pièce intermédiaire, de telle manière qu'au moins une ceinture antérieure et une ceinture postérieure de la surface d'appui soient effectivement en appui respectivement avec deux zones disposées de part et d'autre de la cavité annulaire.

La hauteur de la cavité annulaire est avantageusement comprise entre 10% et 90% de la hauteur totale de la surface d'appui tronconique du manchon ou de la pièce intermédiaire.

Selon une autre forme de réalisation de l'appareil à siège concave tronconique, l'évidement comporte au moins deux gorges annulaires parallèles entre elles, situées au voisinage des bords inférieur et supérieur du siège. Il comporte également au moins une rainure s'étendant sur une partie de la hauteur du siège.

Cette rainure peut être rectiligne et disposée selon une génératrice de la surface tronconique du siège. Cette rainure peut également présentée une forme hélicoïdale, ou toute autre forme appropriée.

Selon un autre mode de réalisation, l'évidement peut comporter un réseau de gorges annulaires parallèles entre elles et de rainures rectilignes formant un réseau de mailles. Les mailles du réseau peuvent avoir leur plus petite dimension inférieure à 2 cm.

Pour assurer un appui efficace du manchon ou de la pièce intermédiaire entre les parois latérales tronconiques du siège, la surface de ce siège disposée entre les deux gorges annulaires extrêmes représente au moins 60% de la surface totale du siège.

Selon une variante comportant une pièce intermédiaire adaptée au siège tronconique de la broche, le manchon peut comporter une première partie cylindrique de section réduite et une seconde partie cylindrique de section élargie, ces deux parties définissant un épaulement à angle droit comprenant une surface annulaire perpendiculaire à l'axe du siège, et la pièce intermédiaire, destinée à recevoir ce manchon, peut comporter une surface d'appui adaptée à la forme et aux dimensions de cet épaulement. Dans ce cas, l'évidement prévu dans la pièce intermédiaire comporte au moins une cavité annulaire ménagée au moins dans la zone centrale de ladite surface d'appui disposée en regard de ladite surface annulaire de l'épaulement du manchon.

Selon une autre forme de réalisation, cet évidement peut comporter au moins deux gorges circulaires et au moins une rainure radiale et/ou un

4                                   0194227

conduit interne reliant entre elles lesdites gorges circulaires, ces gorges et cette rainure étant ménagées dans la partie plane de la surface d'appui de la pièce intermédiaire, disposée en regard de la surface annulaire de l'épaulement à angle droit du manchon.

Selon une autre variante, l'évidement comporte également au moins une cavité annulaire ménagée dans la zone supérieure de la partie cylindrique de la surface d'appui de la pièce intermédiaire, cette zone supérieure étant disposée en regard de la première partie cylindrique de section rétrécie du manchon.

Cette cavité annulaire peut également être remplacée par au moins deux gorges circulaires ménagées dans la zone supérieure de la partie cylindrique de la surface d'appui de la pièce intermédiaire, disposée en regard de la partie cylindrique de section rétrécie du manchon, ces gorges étant reliées par au moins une rainure rectiligne, hélicoïdale ou de forme quelconque.

Selon une forme de réalisation différente de la présente invention, le siège concave peut être cylindrique et comporter à son extrémité supérieure une surface de contact plane, ledit manchon, ou ladite pièce intermédiaire comportant dans ce cas une première partie cylindrique de section rétrécie et une seconde partie cylindrique de section élargie, ces deux parties définissant un épaulement à angle droit comprenant au moins une surface d'appui annulaire perpendiculaire à l'axe du siège, ladite surface de contact plane du siège comportant au moins une cavité annulaire formant ledit évidement, ménagée dans la zone centrale de cette surface de contact plane, disposée en regard de ladite surface d'appui annulaire de l'épaulement.

Cet évidement peut comporter au moins deux gorges circulaires et au moins une rainure radiale qui les relie entre elles, ces gorges et cette rainure étant ménagées dans ladite surface de contact plane du siège, disposée en regard de ladite surface d'appui annulaire du manchon ou de la pièce intermédiaire.

Un cas particulier de cette forme de réalisation peut prévoir un manchon de forme tronconique, la pièce intermédiaire comportant alors également un siège tronconique agencé pour recevoir ce manchon. Dans ce cas, le siège de la pièce intermédiaire comporte au moins un évidement superficiel situé dans la zone de contact de ce siège et du manchon.

Un autre cas particulier de cette forme de réalisation peut prévoir un manchon cylindrique comportant un épaulement définissant une surface d'appui annulaire, et une pièce intermédiaire pourvue d'une surface de contact plane. Dans ce cas, la surface de contact plane comporte au moins un évidement disposé en regard de la partie centrale de la surface d'appui annulaire de l'épaulement du manchon cylindrique. L'évidement peut être remplacé par une ou plusieurs gorges reliées par une ou plusieurs rainures.

Dans le cas où l'appareil comporte une pièce intermédiaire, cette pièce intermédiaire comporte un alésage central dont la forme et les dimensions sont adaptées à celles du manchon et un profil extérieur dont la forme et les dimensions sont adaptées à celles du siège.

Une chambre peut être ménagée dans la broche, en liaison avec au moins une partie de la surface du siège, cette chambre étant en liaison avec les moyens d'aspiration.

Par ailleurs, selon un mode de réalisation particulièrement avantageux, l'appareil comporte des moyens pour mettre en communication l'évidement sélectivement avec une source de fluide à pression super-atmosphérique et une source de fluide à pression sous-atmosphérique. Il comporte également des moyens pour approvisionner la chambre ménagée dans la broche, lorsque cette dernière est prévue, en fluide à pression super-atmosphérique.

Dans ce dernier cas, pour permettre un serrage et un desserrage automatiques du manchon, l'évidement et/ou la chambre sont reliés aux moyens d'aspiration et aux moyens d'approvisionnement en fluide à une pression super-atmosphérique, par l'intermédiaire d'au moins une vanne commandée.

Les moyens de liaison de l'évidement et/ou de la chambre aux moyens d'aspiration et aux moyens d'approvisionnement en fluide à pression super-atmosphérique comportent des conduits ménagés dans la broche et/ou dans la pièce intermédiaire.

La pièce intermédiaire comporte au moins un conduit interne traversant agencé pour mettre en communication l'évidement de cette pièce intermédiaire avec l'évidement de la broche.

Les gorges et/ou les rainures de l'évidement ont un profil général trapézoïdal ou triangulaire.

L'ensemble de ces gorges et de ces rainures représentent moins de 50% de la surface du siège de la broche et/ou de la pièce intermédiaire.

La présente invention sera mieux comprise en référence à la description d'exemples de réalisation et du dessin annexé dans lequel :

La figure 1 représente une vue en coupe d'une première forme de réalisation du siège de la broche de l'appareil selon l'invention,

La figure 2 représente une vue en coupe d'une autre forme de réalisation du siège de la broche de l'appareil selon l'invention,

La figure 3 représente une vue en coupe d'une variante dans laquelle le manchon porte-outils cylindrique est monté sur la broche au moyen d'une pièce intermédiaire logée dans le siège tronconique de cette broche,

La figure 4 représente une autre forme de réalisation similaire à celle de la figure 3 mais où le manchon porte-outils tronconique est lui-même monté sur une pièce intermédiaire dans le siège tronconique de la broche,

La figure 5 représente une autre forme de réalisation dans laquelle le manchon cylindrique est monté sur une broche à siège cylindrique,

La figure 6 représente une variante selon laquelle le manchon tronconique est monté dans une pièce intermédiaire à siège tronconique, elle-même logée dans le siège cylindrique de la broche, et

La figure 7 représente une forme de réalisation où le siège de la broche est cylindrique et où le manchon cylindrique est logé dans un second siège cylindrique ménagé dans la pièce intermédiaire.

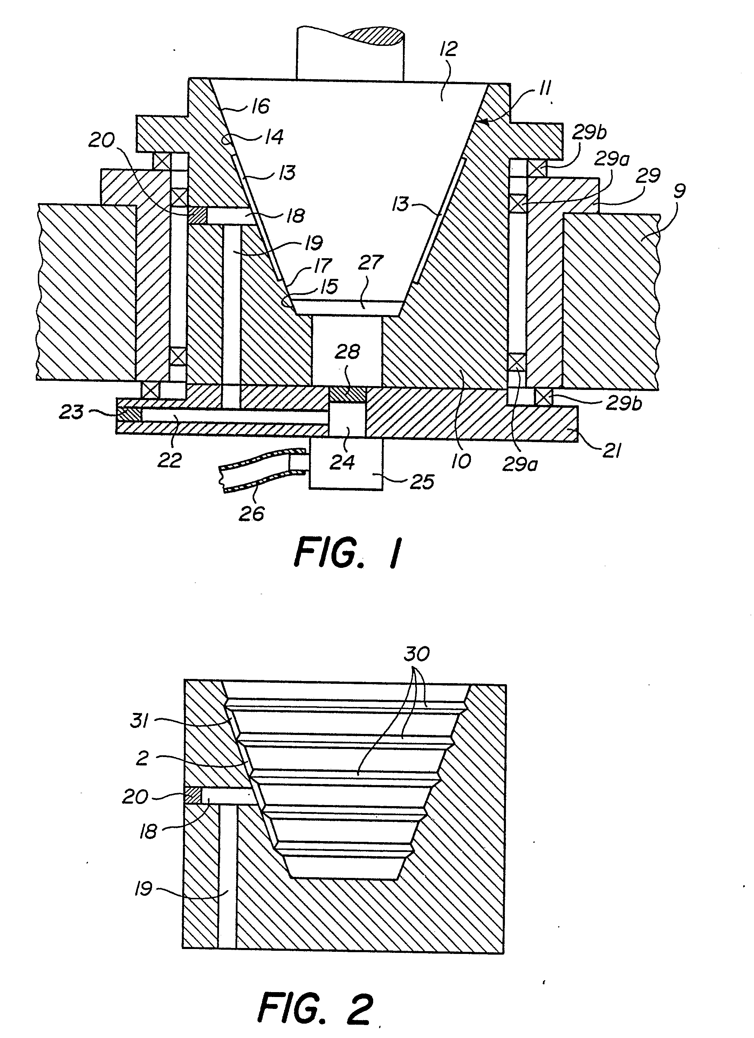

En référence aux figures et notamment à la fig. 1, l'appareil selon l'invention comporte une broche 10 pourvue d'un siège 11 de forme tronconique destiné à recevoir un manchon porte-outils 12 ayant une surface d'appui, également de forme tronconique, dont les dimensions sont adaptées à celles du siège. La surface latérale du siège 11 est équipée d'un évidement 13 sous forme d'une cavité annulaire qui s'étend sur la partie centrale du siège de manière à laisser subsister de part et d'autre de cet évidement deux zones 14 et 15 servant d'appuis effectifs à deux ceintures antérieure 16 et postérieure 17 du manchon porte-outils 12. L'évidement 13 est relié au moyen de conduits 18, 19 à des moyens d'aspiration (non représentés). Un bouchon 20 obture l'extrémité du conduit 18 ménagé dans la paroi de la broche 10.

Le conduit 19 se prolonge vers le bas dans une plaque 21 solidaire du corps de la broche 10. Un conduit transversal 22, obturé en 23 à son extrémité extérieure, assure la liaison du conduit 19 avec un conduit axial 24 ménagé dans la plaque 21 et raccordé à un joint tournant 25 fixe, relié par une tubulure souple 26 auxdits moyens d'aspiration non représentés. Dans l'exemple représenté, une chambre 27 est prévue sous le siège 11. Cette chambre peut, dans le cas où le manchon 12 ne comporte pas d'ouverture axiale, être reliée au conduit axial 24 qui est, dans le cas de la figure, obturé par un bouchon 28 empêchant cette communication.

Le corps de la broche 10 est porté par un support fixe composé d'une douille cylindrique 29 portant des roulements latéraux 29a, et des roulements axiaux 29b, et d'un bâti 9.

Les moyens d'aspiration sont prévus pour évacuer l'air contenu dans le siège et pour assurer un serrage pneumatique du manchon dans le siège. Un système de vanne commmandée peut être prévu pour inverser le sens de circulation de l'air et mettre en communication l'évidement 13 et éventuellement la chambre 21 avec un réservoir d'air sous pression super-atmosphérique. Ce moyen permet de libérer rapidement le manchon après la préparation ou la mesure de l'outil correspondant.

La figure 2 illustre une variante dans laquelle l'évidement sous forme de cavité annulaire de la réalisation précédente a été remplacé par une série de gorges annulaires 30 parallèles entre elles reliées par au moins une rainure 31 rectiligne, hélicoïdale ou ayant toute autre forme appropriée. La rainure 31 peut, en particulier, être disposée selon une génératrice 2 de la surface tronconique du siège 11. Des conduits 18 et 19 identiques à ceux représentés par la fig. 1, permettent de mettre les gorges 30 et la rainure 31 en communication avec des moyens d'aspiration (non illustrés). La mise en communication des gorges et de la rainure avec une pompe à palettes ou tout autre équipement permettant d'abaisser la pression à l'intérieur du siège, ou plus exactement dans lesdites gorges et rainure à une valeur sous-atmosphérique, permet d'assurer comme précédemment un serrage pneumatique du manchon sur la broche. La force d'appui peut être contrôlée avec précision. Si l'on prévoit d'équiper le siège d'un grand nombre de gorges et de rainures de manière à former un réseau de mailles de dimension par exemple inférieure à 2 cm, l'évacuation de l'air initialement contenu dans le siège avant l'introduction du manchon s'effectue très rapidement.

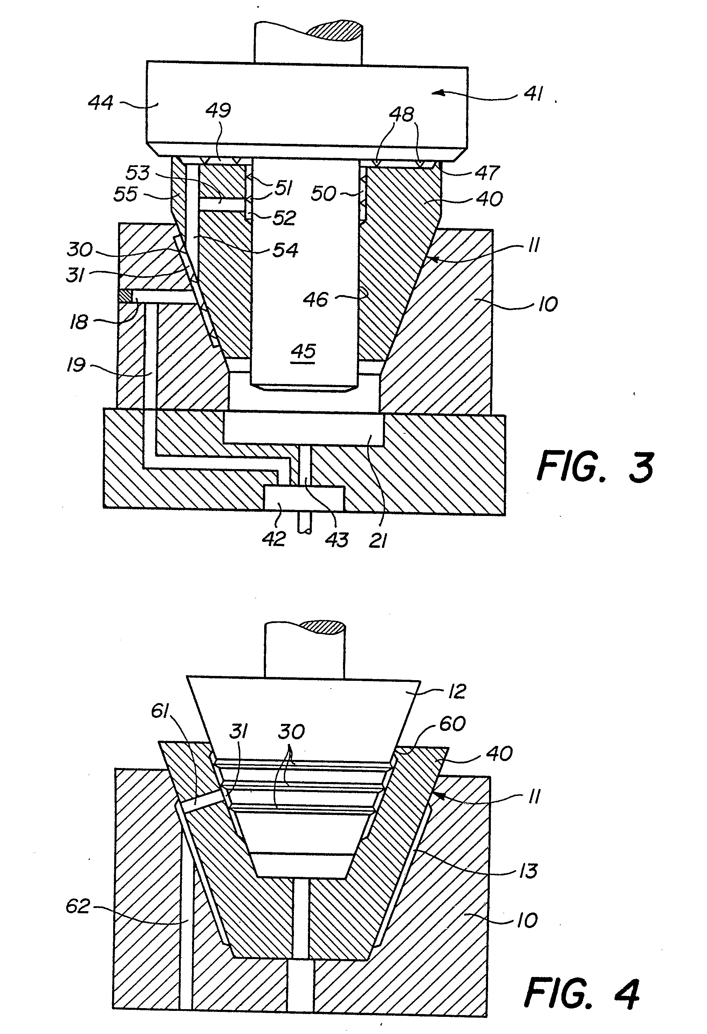

La figure 3 illustre une variante dans laquelle la broche 10 comporte un siège tronconique 11 prévu pour recevoir une pièce intermédiaire 40 portant un manchon porte-outils 41 qui, dans ce cas, est de forme généralement cylindrique. Le siège 11, comporte comme dans le cas de la fig. 2, des gorges annulaires 30 parallèles entre elles et au moins une rainure 31 reliant ces gorges et les raccordant par des tubulures 18 et 19 à des moyens d'aspiration (non représentés). Dans ce cas, le raccordement aux moyens d'aspiration s'effectue par l'intermédiaire d'une vanne 42 qui permet de mettre les gorges annulaires 30 en liaison soit avec une pompe à palettes, soit avec une source d'air comprimé. Une chambre 21, disposée sous le siège 11, est également raccordée à la vanne 42 par un conduit 43.

Il va de soi que les gorges 30 et les rainures 31 pourraient être remplacées par une cavité annulaire du type de celle décrite en référence à la fig. 1. Le but de ces gorges est d'assurer le serrage pneumatique de la pièce intermédiaire 40 dans le siège 11.

Le manchon 41 comporte une première partie cylindrique de section élargie 44 et une seconde partie cylindrique de section rétrécie 45, ces deux parties étant coaxiales et disposées dans le prolongement l'une de l'autre. Pour assurer la mise en place du manchon porte-outils 41, la pièce intermédiaire (40) comporte un alésage central ou siège cylindrique 46 et une surface d'appui 47 de forme annulaire disposée en regard de la surface de contact annulaire perpendiculaire à l'axe du siège, définie par l'épaulement formé par la juxtaposition des deux parties cylindriques de section différente. La surface d'appui 47 est pourvue de gorges circulaires 48 reliées par au moins une rainure radiale(49), cet ensemble pouvant être remplacé par une cavité annulaire ou un réseau plus ou moins dense de gorges et de rainures. Ces gorges peuvent également équiper la partie cylindrique 50 de la surface d'appui de la pièce intermédiaire 40.

Le serrage pneumatique du manchon 41 dans la pièce intermédiaire 40 est obtenu par la liaison des gorges 48, de la ou des rainures 49, des gorges 51 et de la ou des rainures 52 qui équipent la partie cylindrique 50 de la surface d'appui de la pièce intermédiaire auxdits moyens d'aspiration, par l'intermédiaire de tubulures 53, 54 dont la seconde débouche dans la rainure 31 du siège 11, et dont la première est obturée du côté de la périphérie de la pièce intérieure par un bouchon étanche 55.

L'appareil décrit permet d'effectuer simultanément le serrage pneumatique contrôlé d'un manchon porte-outils sur une pièce intermédiaire et le serrage pneumatique contrôlé de cette pièce intermédiaire sur le siège de la broche.

La figure 4 représente une variante dans laquelle la broche 10 comporte un siège tronconique 11 dans lequel est montée une pièce intermédiaire 40 portant un manchon tronconique 12 identique à celui de la réalisation illustrée par la fig. 1. Le siège conique comporte par exemple une cavité annulaire 13 sensiblement identique à celle de la fig. 1. La pièce intermédiaire comporte également un siège tronconique 60 conçu pour recevoir le manchon tronconique 12. Ce siège 60 est équipé de gorges 30 et de rainures 31 identiques à celles de la réalisation illustrée par la fig. 2. Une tubulure 61 relie l'une des rainures 31 à la cavité annulaire 13. Une tubulure 62 relie cette cavité à des moyens d'aspiration (non représentés).

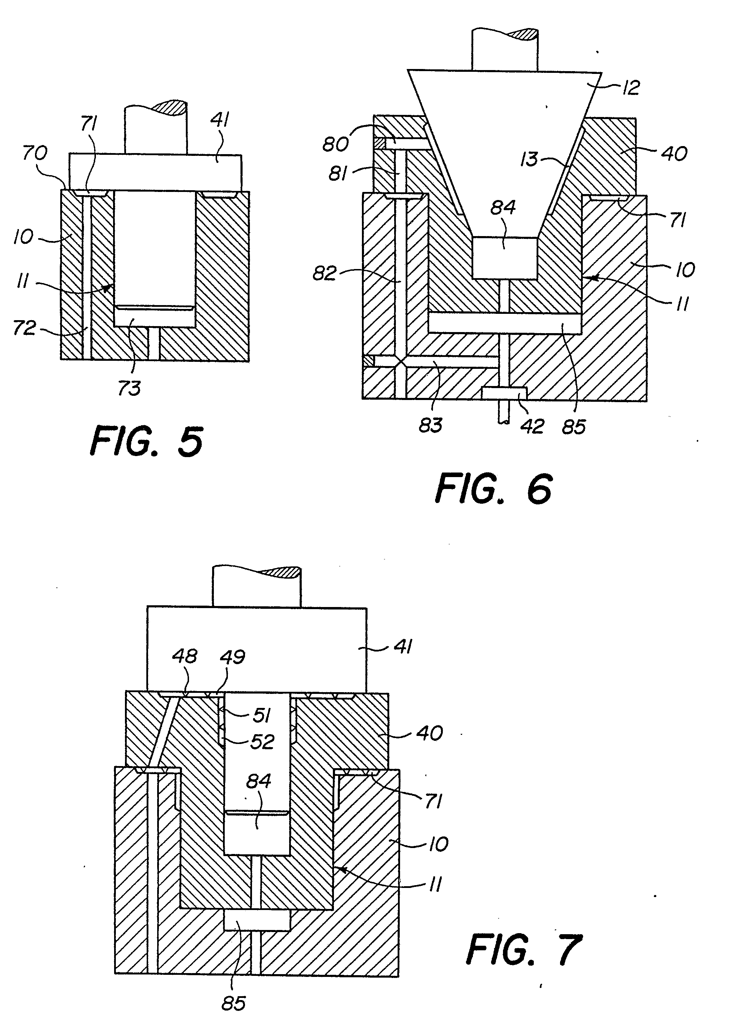

La figure 5 représente une forme de réalisation dans laquelle la broche 10 comporte un siège 11 de forme cylindrique pour recevoir un manchon 41 également de forme cylindrique. Le siège cylindrique comporte une surface d'appui 70 plane de forme annulaire, dans laquelle est ménagé un évidement 71, disposé en regard de la surface de contact annulaire perpendiculaire à l'axe du siège, défini par l'épaulement à angle droit formé par la juxtaposition des deux parties cylindriques de section différente du manchon 41. Comme précédemment, il est prévu un conduit 72 connecté à l'évidement 71. Une chambre 73 peut être disposée au fond du siège cylindrique 11.

Une autre variante est illustrée par la fig. 6. La broche 10 est identique à celle de la fig. 5. Elle est conçue pour recevoir une pièce intermédiaire 40 dont les formes extérieures sont adaptées au siège cylindrique 11 de la broche. Comme précédemment, un évidement 71 qui pourrait être remplacé par un réseau de gorges et rainures, permet d'assurer le serrage pneumatique de la pièce intermédiaire 40 sur le siège 11 de la broche 10.

Cette pièce intermédiaire comporte un fraisage central tronconique agencé pour former un siège prévu pour loger un manchon tronconique 12. Une cavité annulaire 13 est ménagée dans la surface du siège tronconique de la pièce intermédiaire. Cette cavité qui pourrait, comme précédemment, être remplacée par un réseau de gorges annulaires et de rainures de liaison, permet le serrage pneumatique du manchon 12 sur la pièce intermédiaire(40). Un réseau de tubulures 80, 81, 82, 83, ménagées à l'intérieur de la pièce intermédiaire de la broche, permet de relier la cavité annulaire 13 à l'évidement 71, et de connecter cet évidement et les chambres 84, 85 ménagées respectivement sous le siège de la pièce intermédiaire 40 et sous le siège de la broche 10, aux moyens d'aspiration ou à la source d'air comprimé, par l'intermédiaire d'une vanne commandée 42.

La figure 7 représente un autre exemple de réalisation comportant comme précédemment une broche 10 pourvue d'un siège 11 cylindrique, et une pièce intermédiaire 40 destinée à assurer le serrage pneumatique d'un manchon cylindrique 41. Le serrage pneumatique de la pièce intermédiaire s'effectue comme dans le cas de la fig. 6 au moyen d'un évidement 71 ou d'un réseau de gorges et rainures ménagé au moins sur la partie annulaire plane de la surface d'appui de la broche. Le serrage pneumatique du manchon 41 sur la pièce intermédiaire s'effectue comme dans le cas de la fig. 3 au moyen d'une cavité circulaire ou d'un réseau de gorges 48, 51 et de rainures 49, 52.

Des chambres 84 et 85 sont ménagées sous les sièges de la pièce intermédiaire 40 et de la broche 10.

La présente invention n'est pas limitée aux formes de réalisation décrites, mais peut subir différentes modifications et se présenter sous diverses variantes évidentes pour l'homme de l'art.

Revendications

1. Appareil de préparation et/ou de préréglage d'un outil pour machine d'usinage, porté par un manchon ayant un axe de symétrie de révolution, cet appareil comportant d'une part une broche munie d'un siège concave ayant également un axe de symétrie de révolution, ce siège étant conformé pour supporter ledit manchon ou une pièce intermédiaire supportant ce manchon, et d'autre part des moyens pneumatiques pour exercer une force d'appui sur le manchon et/ou la pièce intermédiaire, cette force d'appui ayant une composante parallèle à l'axe du siège concave, caractérisé en ce que ledit siège concave (11) et/ou ladite pièce intermédiaire (40) comportent au moins un évidement superficiel (13) situé dans la zone de contact du siège (11) et du manchon (12, 41), et/ou du siège (11) et de la pièce intermédiaire (40), et/ou de la pièce intermédiaire (40) et du manchon (12, 41), en ce que l'appareil est équipé de moyens d'aspiration de l'air pour abaisser la pression dans le siège à une valeur sous-atmosphérique, et en ce qu'il comporte des moyens de liaison pour mettre en communication lesdits moyens d'aspiration avec ledit évidement superficiel.

2. Appareil selon la revendication 1, dans lequel ledit siège concave est tronconique et ledit manchon (12, 41) ou ladite pièce intermédiaire (40) comportent une surface d'appui tronconique agencée pour s'adapter audit siège, caractérisé en ce que ledit évidement superficiel (13) comporte au moins une cavité annulaire ménagée dans la zone centrale de la surface du siège (11), la hauteur de cette zone centrale étant inférieure à la hauteur de ladite surface d'appui tronconique du manchon ou de la pièce intermédiaire, de telle manière qu'au moins une ceinture antérieure et une ceinture postérieure de ladite surface d'appui soient effectivement en appui respectivement avec deux zones disposées de part et d'autre de ladite cavité annulaire.

3. Appareil selon la revendication 2, caractérisé en ce que la hauteur de la cavité annulaire est comprise entre 10% et 90% de la hauteur totale de la surface d'appui tronconique du manchon (12, 41) ou de la pièce intermédiaire (40).

4. Appareil selon la revendication 1, dans lequel ledit siège concave (11) est tronconique et ledit manchon (12) ou ladite pièce intermédiaire (40) comporte une surface de contact tronconique agencée pour s'adapter audit siège tronconique, caractérisé en ce que ledit évidement (13) comporte au moins deux gorges annulaires (30) parallèles entre elles, situées au voisinage des bords inférieur et supérieur du siège.

5. Appareil selon la revendication 1, caractérisé en ce que ledit évidement comporte au moins une rainure (31) s'étendant sur une partie de la hauteur du siège.

6. Appareil selon la revendication 5, caractérisé en ce que ladite rainure (31) présente une forme rectiligne, disposée selon une génératrice de la surface tronconique du siège.

7. Appareil selon la revendication 5, caractérisé en ce que ladite rainure (31) présente une forme hélicoïdale.

8. Appareil selon les revendications 4 et 5 caractérisé en ce que ledit évidement comporte un réseau de gorges annulaires (30) parallèles entre elles et de rainures rectilignes (31) formant un réseau de mailles.

9. Appareil selon la revendication 8, caractérisé en ce que les mailles du réseau ont leur plus petite dimension inférieure à 2 cm.

10. Appareil selon la revendication 4, caractérisé en ce que la partie de la surface du siège disposée entre les deux gorges annulaires (30) extrêmes représente au moins 60% de la surface tronconique totale dudit siège.

11. Appareil selon la revendication 2, dans lequel le manchon (41) comporte une première partie cylindrique de section réduite et une seconde partie cylindrique de section élargie, ces deux parties définissant un épaulement à angle droit, comprenant une surface annulaire perpendiculaire à l'axe du siège, et dans lequel la pièce intermédiaire comporte une surface d'appui adaptée à la forme et aux dimensions de l'épaulement, caractérisé en ce que ladite surface d'appui comporte au moins une cavité annulaire formant ledit évidement, ménagée dans la zone centrale de cette surface d'appui, disposée en regard de ladite surface annulaire de l'épaulement du manchon.

12. Appareil selon la revendication 11, caractérisé en ce que ledit évidement comporte au moins deux gorges circulaires (48) et au moins une rainure radiale (49) et/ou une tubulure interne reliant entre elles lesdites gorges circulaires (48), ces gorges et cette rainure étant ménagées dans la partie plane de la surface d'appui de la pièce intermédiaire, disposée en regard de la surface annulaire de l'épaulement à angle droit du manchon.

13. Appareil selon la revendication 11, caractérisé en ce que ledit évidement comporte également au moins une cavité annulaire ménagée dans la zone supérieure de la partie cylindrique de la surface d'appui de la pièce intermédiaire, cette zone supérieure étant disposée en regard de la première partie cylindrique de section rétrécie du manchon.

14. Appareil selon la revendication 13, caractérisé en ce que ledit évidement comporte au moins deux gorges circulaires (51) ménagées dans la zone supérieure de la partie cylindrique de la surface d'appui de la pièce intermédiaire, disposée en regard de la partie cylindrique de section rétrécie du manchon, ces gorges étant reliées par au moins une rainure rectiligne (52), hélicoïdale ou de forme quelconque.

15. Appareil selon la revendication 1, dans lequel ledit siège concave (11) est cylindrique et comporte à son extrémité supérieure une surface de contact plane, et dans lequel ledit manchon (41) ou ladite pièce intermédiaire (40) comporte une première partie cylindrique de section rétrécie et une seconde partie cylindrique de section élargie, ces deux parties définissant un épaulement à angle droit comprenant au moins une surface d'appui annulaire perpendiculaire à l'axe du siège, caractérisé en ce que ladite surface de contact plane du siège comporte au moins une cavité annulaire (71) formant ledit évidement, ménagée dans la zone centrale de cette surface de contact plane, disposée en regard de ladite surface d'appui annulaire de l'épaulement.

16. Appareil selon la revendication 15, caractérisé en ce que ledit évidement comporte au moins deux gorges circulaires et au moins une rainure radiale reliant entre elles lesdites gorges circulaires, ces gorges et cette rainure étant ménagées dans ladite surface de contact plane du siège, disposée en regard de ladite surface d'appui annulaire dudit manchon ou de la pièce intermédiaire.

17. Appareil selon les revendications 15 ou 16, dans lequel ledit manchon (12) est tronconique, et dans lequel la pièce intermédiaire (40) comporte également un siège tronconique agencé pour recevoir ledit manchon, caractérisé en ce que le siège (11) de la pièce intermédiaire comporte au moins un évidement superficiel situé dans la zone de contact de ce siège et du manchon.

18. Appareil selon les revendications 15 ou 16, dans lequel ledit manchon (41) est cylindrique et comporte un épaulement définissant une surface d'appui annulaire, et dans lequel la pièce intermédiaire comporte une surface de contact plane, caractérisé en ce que ladite surface de contact plane comporte au moins un évidement (48, 51) disposé en regard de la partie centrale de ladite surface d'appui annulaire de l'épaulement du manchon cylindrique.

19. Appareil selon l'une quelconque des revendications précédentes, caractérisé en ce que la pièce intermédiaire comporte un alésage central dont la forme et les dimensions sont adaptées à celles du manchon, et un profil extérieur dont la forme et les dimensions sont adaptées à celle du siège.

20. Appareil selon l'une quelconque des revendications précédentes, caractérisé en ce qu'il comporte une chambre (21) ménagée dans la broche, en liaison avec au moins une partie du siège, cette chambre étant en liaison avec lesdits moyens d'aspiration.

21. Appareil selon l'une quelconque des revendications précédentes, caractérisé en ce qu'il comporte des moyens pour mettre en communication ledit évidement sélectivement avec une source de fluide à pression super-atmosphérique, et une source de fluide à pression sous-atmosphérique.

22. Appareil selon la revendication 20, caractérisé en ce qu'il comporte des moyens pour approvisionner ladite chambre en fluide à pression super-atmosphérique.

23. Appareil selon l'une quelconque des revendications précédentes, caractérisé en ce que lesdits moyens de liaison pour mettre en communication lesdits moyens d'aspiration et ledit évidement sont liés auxdits moyens pour approvisionner ledit évidement et/ou ladite chambre en fluide à pression super-atmosphérique, par l'intermédiaire d'au moins une vanne commandée (42).

24. Appareil selon l'une quelconque des revendications précédentes, caractérisé en ce que lesdits moyens de liaison comportent des conduits ménagés à l'intérieur de la broche équipée du siège et/ou de la pièce intermédiaire.

25. Appareil selon la revendication 1, caractérisé en ce que la pièce intermédiaire comporte au moins un conduit interne (53, 53, 61) traversant agencé pour mettre en communication l'évidement de cette pièce intermédiaire avec l'évidement de la broche.

26. Appareil selon l'une quelconque des revendications précédentes, caractérisé en ce que les gorges et/ou les rainures ont un profil général trapézoïdal ou triangulaire.

27. Appareil selon l'une quelconque des revendications précédentes, caractérisé en ce que la surface de l'ensemble des gorges et des rainures représente moins de 50% de la surface du siège de la broche et/ou de la pièce intermédiaire.

FIG. 1

FIG. 2

**FIG. 3**

**FIG. 4**

**FIG. 5**

**FIG. 6**

**FIG. 7**

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 452 779  (ALLPACK)  <br><br>* Page 2, ligne 31 - page 3, ligne 2; figure 2 * | 1,20-24 | B 23 B   31/30 <br> B 23 Q    3/00 <br> B 25 B   11/00 |
| A | | 2,3 | |
| A | GB-A- 601 326  (HARRIS) <br> * Page 1, lignes 34-47; figure 2 * | 1-3 | |
| A | GB-A- 984 957  (DUNHAM)  <br><br>* Page 2, ligne 89 - page 3, ligne 78; figure 2 * | 4,10, 26 | |
| A | GB-A-1 047 872  (PHILCO) <br> * Page 3, lignes 54-78; figures 6,7 * | 12 | **DOMAINES TECHNIQUES RECHERCHES (Int. Cl.4)** |
| A | DE-A-1 646 147  (TELEFUNKEN) <br> * Figure 4 * | 25 | B 23 B <br> B 25 B |
| A | MECHANICAL WORLD, vol. 133, no. 3404, mars 1953, page 123, Emmott & Co., Manchester, GB, R.F.: "A vacuum chuck" <br> * Page 123; figures 1,2 * | 27 | |
| A | US-A-1 744 313  (KADOW) | | |

---      -/-

Le présent rapport de recherche a été établi pour toutes les revendications

| Lieu de la recherche <br> LA HAYE | Date d'achèvement de la recherche <br> 21-05-1986 | Examinateur <br> HUGGINS  J.D. |
|---|---|---|

**Office européen des brevets**

**RAPPORT DE RECHERCHE EUROPEENNE**

| | **DOCUMENTS CONSIDERES COMME PERTINENTS** | Page 2 | |
|---|---|---|---|
| Catégorie | Citation du document avec indication, en cas de besoin, des parties pertinentes | Revendication concernée | CLASSEMENT DE LA DEMANDE (Int. Cl.4) |
| A | US-A-3 293 739 (HOGLUND) --- | | |
| A | FR-A-1 544 095 (ENERGIE ATOMIQUE) ----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 21-05-1986 | HUGGINS J.D. |